# EUROPEAN PATENT SPECIFICATION

(11) **EP 4 146 763 B1**
(45) Date of publication and mention of the grant of the patent: **04.11.2026**
(21) Application number: 21800309.3
(22) Date of filing: 04.05.2021
(51) Int. Cl.: C09K 5/04, C10M 171/00, C10N 20/00, C10N 40/16, C10N 40/30

(54) **AZEOTROPE AND AZEOTROPE-LIKE COMPOSITIONS OF 1-CHLORO-1,2 DIFLUOROETHYLENE AND 2,3,3,3-TETRAFLUOROPROP-1-ENE**
AZEOTROPE UND AZEOTROPARTIGE ZUSAMMENSETZUNGEN AUS 1-CHLOR-1,2-DIFLUORETHYLEN UND 2,3,3,3-TETRAFLUORPROP-1-EN
COMPOSITIONS AZÉOTROPES ET DE TYPE AZÉOTROPE DE 1-CHLORO-1,2-DIFLUOROÉTHYLÈNE ET DE 2,3,3,3-TÉTRAFLUOROPROP-1-ÈNE

(30) Priority: 08.05.2020 US 202063021698 P
(43) Date of publication of application: 15.03.2023
(73) Proprietor: Arkema, Inc., King of Prussia, PA 19406 (US)
(72) Inventor: CHEN, Benjamin Bin, Wayne, Pennsylvania 19087 (US); KIM, Sarah, Philadelphia, Pennsylvania 19103 (US); KOO, Brian T., King of Prussia, Pennsylvania 19406 (US); CLARKSON, Lucy M., Chadds Ford, Pennsylvania 19317 (US)
(74) Representative: Arkema Patent
(86) International application number: PCT/US2021/030611
(87) International publication number: WO 2021/226051

(56) References cited:
- US-A1- 2016 002 518
- US-A1- 2016 009 555
- US-A1- 2016 369 145

## Description

### FIELD OF INVENTION

The present invention relates to azeotrope and azeotrope-like compositions comprising 1-chloro-1,2 difluoroethylene (R-1122a) and 2,3,3,3-tetrafluoropropene (HFO-1234yf) and uses thereof.

### BACKGROUND

Fluorocarbon based fluids have found widespread use in industry in a number of applications, including as refrigerants, aerosol propellants, blowing agents, heat transfer media, and gaseous dielectrics. Because of the suspected environmental problems associated with the use of some of these fluids, including the relatively high global warming potentials associated therewith, it is desirable to use fluids having low or even zero ozone depletion potential. Additionally, the use of single component fluids or azeotropic mixtures, which do not fractionate on boiling and evaporation, is desirable. Safety concerns such as flammability may also limit the widespread adoption of refrigerants for commercial and residential use. The selection of refrigerants for vapor compression HVAC&R systems requires tradeoffs between performance, safety, and environmental impact. However, the identification of new, safe, environmentally safe, non-fractionating mixtures is complicated due to the fact that azeotrope formation is not readily predictable.

The industry is continually seeking new fluorocarbon based mixtures that offer alternatives, and are considered environmentally safer substitutes for CFCs and HCFCs.

The Montreal Protocol for the protection of the ozone layer mandate the phase out of the use of chlorofluorocarbons (CFCs). Materials more "friendly" to the ozone layer, such as hydrofluorocarbons (HFCs) eg HFC-134a replaced chlorofluorocarbons. The latter compounds have proven to be green house gases, causing global warming and were regulated by the Kyoto Protocol on Climate Change. The emerging replacement materials, hydrofluoropropenes, were shown to be environmentally acceptable ie have zero ozone depletion potential (ODP) and acceptable low GWP. It is known from US2016369145, a working fluid for heat cycle, which contains trifluoroethylene and 2,3,3,3-tetrafluoropropene, wherein the proportion of the total amount of trifluoroethylene and 2,3,3,3-tetrafluoropropene based on the entire amount of the working fluid is higher than 90 mass % and at most 100 mass %, and the proportion of trifluoroethylene based on the total amount of trifluoroethylene and 2,3,3,3-tetrafluoropropene is at least 21 mass % and at most 39 mass %, a composition for a heat cycle system, which comprises the working fluid for heat cycle, and a heat cycle system, which employs the composition.

The object of the present invention is to provide novel compositions that can serve as refrigerants, heat transfer fluids, blowing agents, solvents, etc. that provide unique characteristics to meet the demands of low or zero ozone depletion potential and lower global warming potential as compared to the current HFCs.

### BRIEF DESCRIPTION OF THE DRAWINGS

Figure 1 is a vapor liquid equilibrium plot for HFO-1122a and R-1234yf using COSMO-RS 2015 modeling.
Figure 2 is a vapor liquid equilibrium plot for HFO-1122a and R-1234yf using COSMO-RS 2017 modeling.

### DESCRIPTION OF PREFERRED EMBODIMENTS

The present inventors have developed several compositions that help to satisfy the continuing need for alternatives to CFCs, HCFCs and HFCs. According to certain embodiments, the present invention provides azeotrope or azeotrope-like compositions comprising 1-chloro-1,2 difluoroethylene (R-1122a) and 2,3,3,3-tetrafluoropropene (HFO-1234yf).

The preferred compositions of the invention tend both to be low- to non-flammable and to exhibit relatively low global warming potentials ("GWPs"). Accordingly, applicants have recognized that such compositions can be used to great advantage in a number of applications, including as replacements for CFCs, HCFCs, and HFCs (such as HCFC-23, HFC-134a, HFC-245fa, HFC-365mfc etc.) in refrigerant, aerosol, and other applications.

Additionally, applicants have recognized surprisingly that azeotrope or azeotrope-like compositions of 1-chloro-1,2 difluoroethylene (R-1122a) and 2,3,3,3-tetrafluoropropene (HFO-1234yf) can be formed. Accordingly, in other embodiments, the present invention provides methods of producing an azeotrope-like composition comprising combining 1-chloro-1,2 difluoroethylene (R-1122a) and 2,3,3,3-tetrafluoropropene (HFO-1234yf) in amounts effective to produce an azeotrope-like composition.

In addition, applicants have recognized that the azeotrope-like compositions of the present invention exhibit properties that make them advantageous for use as, or in, refrigerant compositions and in foam blowing agents. Accordingly, in yet other embodiments, the present invention provides refrigerant compositions and/or foam blowing agents, and solvents comprising an azeotrope-like composition of 1-chloro-1,2 difluoroethylene (R-1122a) and 2,3,3,3-tetrafluoropropene (HFO-1234yf).

### Azeotrope-Like Compositions

As used herein, the term "azeotrope-like" is intended in its broad sense to include both compositions that are strictly azeotropic and compositions that behave like azeotropic mixtures. From fundamental principles, the thermodynamic state of a fluid is defined by pressure, temperature, liquid composition, and vapor composition. An azeotropic mixture is a system of two or more components in which the liquid composition and vapor composition are equal at the stated pressure and temperature. In practice, this means that the components of an azeotropic mixture are constant boiling and cannot be separated during a phase change.

The azeotrope-like compositions of the present invention may include additional components that do not form new azeotrope-like systems, or additional components that are not in the first distillation cut. The first distillation cut is the first cut taken after the distillation column displays steady state operation under total reflux conditions. One way to determine whether the addition of a component forms a new azeotrope-like system so as to be outside of this invention is to distill a sample of the composition with the component under conditions that would be expected to separate a non-azeotropic mixture into its separate components. If the mixture containing the additional component is non-azeotrope-like, the additional component will fractionate from the azeotrope-like components. If the mixture is azeotrope-like, some finite amount of a first distillation cut will be obtained that contains all of the mixture components that is constant boiling or behaves as a single substance.

It follows from this that another characteristic of azeotrope-like compositions is that there is a range of compositions containing the same components in varying proportions that are azeotrope-like or constant boiling. All such compositions are intended to be covered by the terms "azeotrope-like" and "constant boiling". As an example, it is well known that at differing pressures, the composition of a given azeotrope will vary at least slightly, as does the boiling point of the composition. Thus, an azeotrope of A and B represents a unique type of relationship, but with a variable composition depending on temperature and/or pressure. It follows that, for azeotrope-like compositions, there is a range of compositions containing the same components in varying proportions that are azeotrope-like. All such compositions are intended to be covered by the term azeotrope-like as used herein.

It is well recognized in the art that it is not possible to predict the formation of azeotropes. Applicants have discovered unexpectedly that combinations of 1-chloro-1,2 difluoroethylene (R-1122a) and 2,3,3,3-tetrafluoropropene (HFO-1234yf) form azeotrope or azeotrope like blends.

According to certain preferred embodiments, the azeotrope or azeotrope-like compositions of the present invention comprise, and preferably consist essentially of, effective azeotrope or azeotrope-like amounts of 1-chloro-1,2 difluoroethylene (R-1122a) and 2,3,3,3-tetrafluoropropene (HFO-1234yf). The term "effective azeotrope-like amounts" as used herein refers to the amount of each component that upon combination with the other components, results in the formation of an azeotrope-like composition of the present invention. Preferably, the present azeotrope-like compositions comprise, and preferably consist essentially of, from about 99 to about 1 mole percent 1-chloro-1,2 difluoroethylene (R-1122a) and from about 1 to about 99 mole percent of 2,3,3,3-tetrafluoropropene (HFO-1234yf). More preferably, the present azeotrope-like compositions comprise, and preferably consist essentially of, from about 10 to about 70 mole percent 1-chloro-1,2 difluoroethylene (R-1122a) and from about 30 to about 90 mole percent of 2,3,3,3-tetrafluoropropene (HFO-1234yf). Even more preferably, the present azeotrope-like compositions comprise, and preferably consist essentially of, from about 10 to about 40 mole percent 1-chloro-1,2 difluoroethylene (R-1122a) and from about 60 to about 90 mole percent of 2,3,3,3-tetrafluoropropene (HFO-1234yf). More preferably, the present azeotrope compositions comprise, and preferably consist essentially of, 40 mole percent 1-chloro-1,2 difluoroethylene (R-1122a) and about 60 mole percent of 2,3,3,3-tetrafluoropropene (HFO-1234yf. Unless otherwise indicated, the mole percents disclosed herein are based on the total moles of 1-chloro-1,2 difluoroethylene (R-1122a) and 2,3,3,3-tetrafluoropropene (HFO-1234yf) in a composition.

The azeotrope-like compositions of the present invention can be produced by combining effective azeotrope or azeotrope-like amounts of 1-chloro-1,2 difluoroethylene (R-1122a) and 2,3,3,3-tetrafluoropropene (HFO-1234yf). Any of a wide variety of methods known in the art for combining two or more components to form a composition can be adapted for use in the present methods to produce an azeotrope-like composition. For example, 1-chloro-1,2 difluoroethylene (R-1122a) and 2,3,3,3-tetrafluoropropene (HFO-1234yf) can be mixed, blended, or otherwise contacted by hand and/or by machine, as part of a batch or continuous reaction and/or process, or via combinations of two or more such steps. In light of the disclosure herein, those of skill in the art will be readily able to prepare azeotrope-like compositions according to the present invention without undue experimentation.

### Composition Additives

The azeotrope or azeotrope-like compositions of the present invention may further include any of a variety of optional additives including stabilizers, metal passivators, corrosion inhibitors, and the like.

In certain preferred embodiments, the compositions of the present invention further comprise a lubricant. Any of a variety of conventional lubricants may be used in the compositions of the present invention. An important requirement for the lubricant is that, when in use in a refrigerant system, there must be sufficient lubricant returning to the compressor of the system such that the compressor is lubricated. Thus, suitability of a lubricant for any given system is determined partly by the refrigerant/lubricant characteristics and partly by the characteristics of the system in which it is intended to be used. Examples of suitable lubricants include mineral oil, alkyl benzenes, polyol esters, including polyalkylene glycols, PAG oil, and the like. Mineral oil, which comprises paraffin oil or naphthenic oil, is commercially available. Commercially available mineral oils include Witco LP 250 (registered trademark) from Witco, Zerol 300 (registered trademark) from Shrieve Chemical, Sunisco 3GS from Witco, and Calumet R015 from Calumet. Commercially available alkyl benzene lubricants include Zerol 150 (registered trademark). Commercially available esters include neopentyl glycol dipelargonate which is available as Emery 2917 (registered trademark) and Hatcol 2370 (registered trademark). Other useful esters include phosphate esters, dibasic acid esters, and fluoroesters. Preferred lubricants include polyalkylene glycols and esters. Certain more preferred lubricants include polyalkylene glycols.

### Uses of the Compositions

The present compositions have utility in a wide range of applications. For example, one embodiment of the present invention relates to refrigerant compositions comprising the present azeotrope-like compositions.

The refrigerant compositions of the present invention may be used in any of a wide variety of refrigeration systems including air-conditioning, refrigeration, heat-pump, chiller, HVAC systems, and the like. In certain preferred embodiments, the compositions of the present invention are used in refrigeration systems originally designed for use with an HCFC or HFC refrigerant, such as, for example, HCFC-12 or HFC-134a. The preferred compositions of the present invention tend to exhibit many of the desirable characteristics of HFC-134a and other HFC refrigerants, including a GWP that is as low, or lower than that of conventional HFC refrigerants and a capacity that is as high or similar to such refrigerants. In addition, the relatively constant boiling nature of the compositions of the present invention makes them even more desirable than certain conventional HFCs for use as refrigerants in many applications.

In certain other preferred embodiments, the present compositions are used in refrigeration systems originally designed for use with a HFC-refrigerant. Preferred refrigeration compositions of the present invention may be used in refrigeration systems containing a lubricant used conventionally with CHC-refrigerants, such as mineral oils, silicone oils, polyalkylene glycol oils, and the like, or may be used with other lubricants traditionally used with HFC refrigerants. As used herein the term "refrigeration system" refers generally to any system or apparatus, or any part or portion of such a system or apparatus, which employs a refrigerant to provide cooling. Such refrigeration systems include, for example, air conditioners, electric refrigerators, chillers, transport refrigeration systems, commercial refrigeration systems and the like.

Any of a wide range of methods for introducing the present refrigerant compositions to a refrigeration system can be used in the present invention. For example, one method comprises attaching a refrigerant container to the low-pressure side of a refrigeration system and turning on the refrigeration system compressor to pull the refrigerant into the system. In such embodiments, the refrigerant container may be placed on a scale such that the amount of refrigerant composition entering the system can be monitored. When a desired amount of refrigerant composition has been introduced into the system, charging is stopped. Alternatively, a wide range of charging tools, known to those of skill in the art, is commercially available. Accordingly, in light of the above disclosure, those of skill in the art will be readily able to introduce the refrigerant compositions of the present invention into refrigeration systems according to the present invention without undue experimentation.

According to certain other embodiments, the present invention provides refrigeration systems comprising a refrigerant of the present invention and methods of producing heating or cooling by condensing and/or evaporating a composition of the present invention. In certain preferred embodiments, the methods for cooling an article according to the present invention comprise condensing a refrigerant composition comprising an azeotrope-like composition of the present invention and thereafter evaporating said refrigerant composition in the vicinity of the article to be cooled. Certain preferred methods for heating an article comprise condensing a refrigerant composition comprising an azeotrope-like composition of the present invention in the vicinity of the article to be heated and thereafter evaporating said refrigerant composition. In light of the disclosure herein, those of skill in the art will be readily able to heat and cool articles according to the present inventions without undue experimentation.

In another embodiment, the azeotrope-like compositions of this invention may be used as propellants in sprayable compositions, either alone or in combination with known propellants. The propellant composition comprises, more preferably consists essentially of, and, even more preferably, consists of the azeotrope-like compositions of the invention. The active ingredient to be sprayed together with inert ingredients, solvents, and other materials may also be present in the sprayable mixture. Preferably, the sprayable composition is an aerosol. Suitable active materials to be sprayed include, without limitation, cosmetic materials such as deodorants, perfumes, hair sprays, cleansers, and polishing agents as well as medicinal materials such as anti-asthma and anti-halitosis medications.

Yet another embodiment of the present invention relates to a blowing agent comprising one or more azeotrope-like compositions of the invention. In other embodiments, the invention provides foamable compositions, and preferably polyurethane and polyisocyanurate foam compositions, and methods of preparing foams. In such foam embodiments, one or more of the present azeotrope-like compositions are included as a blowing agent in a foamable composition, which composition preferably includes one or more additional components capable of reacting and foaming under the proper conditions to form a foam or cellular structure, as is well known in the art. Any of the methods well known in the art, may be used or adapted for use in accordance with the foam embodiments of the present invention.

Another embodiment of this invention relates to a process for preparing a foamed thermoplastic product is as follows: Prepare a foamable polymer composition by blending together components comprising foamable polymer composition in any order. Typically, a foamable polymer composition is prepared by plasticizing a polymer resin and then blending in components of a blowing agent composition at an initial pressure. A common process of plasticizing a polymer resin is heat plasticization, which involves heating a polymer resin enough to soften it sufficiently to blend in a blowing agent composition. Generally, heat plasticization involves heating a thermoplastic polymer resin to or near to its glass transition temperature (Tg), or melt temperature (Tm) for crystalline polymers.

Other uses of the present azeotrope-like compositions include use as solvents, cleaning agents, and the like. Examples include vapor degreasing, precision cleaning, electronics cleaning, drying cleaning, solvent etching cleaning, carrier solvents for depositing lubricants and release agents, and other solvent or surface treatment. Those of skill in the art will be readily able to adapt the present compositions for use in such applications without undue experimentation.

### Example

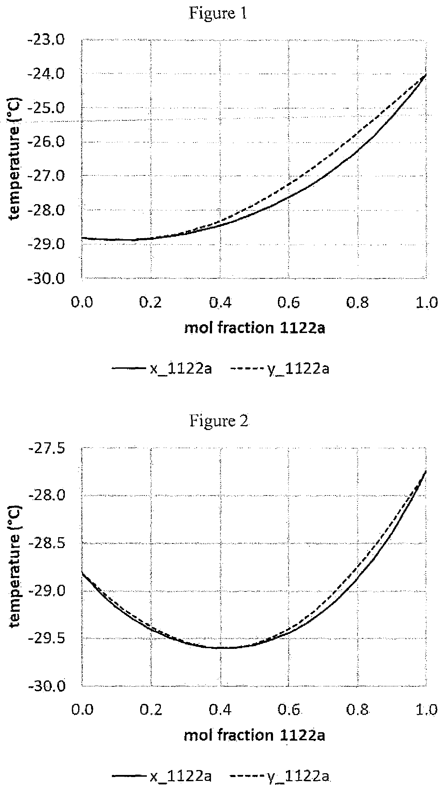

Refrigerant blends with principal components cis-HFO-1122a and trans-HFO-1122a were modeled with COSMO-RS to determine equilibrium liquid and vapor mole fractions at atmospheric pressure, and determine whether azeotropic and/or azeotrope like mixtures could be obtained with refrigerant R-1234yf. COSMO-RS (Conductor like Screening Model for Real Solvents) is a quantum chemistry model used to predict the thermodynamic properties of molecules. The 2015 and 2017 implementations of COSMOtherm were utilized to obtain simulation results, shown in the Table I and Figures 1 and 2. Both parameterizations of the model show no discernable difference in boiling point between the cis (Z) and trans (E) isomers of R-1122a. The models show a potential azeotrope between HFO-1122a and R-1234yf at a molar ratio of approximately 10/90 or 40/60, depending on the model parameterization. The isomer of HFO-1122a does not appear to affect the azeotropic ratio. The model shows a potential azeotrope-like combination between HFO-1122a and R-1234yf at a molar ratios of from approximately 10/90 to 40/60.

**Table 1. COSMO-RS 2015 and 2017 Data**

| Blend | COSMO-RS 2015 Azeotropic composition | COSMO-RS 2015 Boiling point (°C) | COSMO-RS 2017 Azeotropic composition | COSMO-RS 2017 Boiling point (°C) |
|---|---|---|---|---|
| HFO-1122a (Z)/ R-1234yf | 10%/90% | -28.9 | 40%/60% | -29.6 |
| HFO-1122a (E)/ R-1234yf | 10%/90% | -28.8 | 40%/60% | -29.5 |

## Claims

1. An azeotrope-like composition comprising effective amounts of 1-chloro-1,2 difluoroethylene (R-1122a) and 2,3,3,3-tetrafluoropropene (HFO-1234yf).

2. The azeotrope-like composition of claim 1, where in the molar ratio of 1-chloro-1,2 difluoroethylene (R-1122a) to 2,3,3,3-tetrafluoropropene (HFO-1234yf) ranges from about 99 to 1 to about 99 to 1.

3. The azeotrope-like composition of claim 1, where in the molar ratio of 1-chloro-1,2 difluoroethylene (R-1122a) to 2,3,3,3-tetrafluoropropene (HFO-1234yf) ranges from about 10 to about 70 to about 90 to 30.

4. The azeotrope-like composition of claim 1, where in the molar ratio of 1-chloro-1,2 difluoroethylene (R-1122a) to 2,3,3,3-tetrafluoropropene (HFO-1234yf) ranges from about 10 to about 40 to about 90 to 60.

5. The azeotrope-like composition of claim 1, where in the molar ratio of 1-chloro-1,2 difluoroethylene (R-1122a) to 2,3,3,3-tetrafluoropropene (HFO-1234yf) is about 10 to 90.

## Patentansprüche

1. Azeotropartige Zusammensetzung, umfassend wirksame Mengen an 1-Chlor-1,2-difluorethylen (R-1122a) und 2,3,3,3-Tetrafluorpropen (HFO-1234yf).

2. Azeotropartige Zusammensetzung nach Anspruch 1, wobei das Molverhältnis von 1-Chlor-1,2-difluorethylen (R-1122a) zu 2,3,3,3-Tetrafluorpropen (HFO-1234yf) im Bereich von etwa 99 zu 1 bis etwa 99 zu 1 liegt.

3. Azeotropartige Zusammensetzung nach Anspruch 1, wobei das Molverhältnis von 1-Chlor-1,2-difluorethylen (R-1122a) zu 2,3,3,3-Tetrafluorpropen (HFO-1234yf) im Bereich von etwa 10 zu etwa 70 bis etwa 90 zu 30 liegt.

4. Azeotropartige Zusammensetzung nach Anspruch 1, wobei das Molverhältnis von 1-Chlor-1,2-difluorethylen (R-1122a) zu 2,3,3,3-Tetrafluorpropen (HFO-1234yf) im Bereich von etwa 10 zu etwa 40 bis etwa 90 zu 60 liegt.

5. Azeotropartige Zusammensetzung nach Anspruch 1, wobei das Molverhältnis von 1-Chlor-1,2-difluorethylen (R-1122a) zu 2,3,3,3-Tetrafluorpropen (HFO-1234yf) etwa 10 zu 90 beträgt.

## Revendications

1. Composition de type azéotrope comprenant des quantités efficaces de 1-chloro-1,2 difluoroéthylène (R-1122a) et 2,3,3,3-tétrafluoropropène (HFO-1234yf).

2. Composition de type azéotrope selon la revendication 1, dans laquelle le rapport molaire de 1-chloro-1,2-difluoroéthylène (R-1122a) sur 2,3,3,3-tétrafluoropropène (HFO-1234yf) est dans la plage d'environ 99 sur 1 à environ 99 sur 1.

3. Composition de type azéotrope selon la revendication 1, dans laquelle le rapport molaire de 1-chloro-1,2 difluoroéthylène (R-1122a) sur 2,3,3,3-tétrafluoropropène (HFO-1234yf) est dans la plage d'environ 10 sur environ 70 à environ 90 sur 30.

4. Composition de type azéotrope selon la revendication 1, dans laquelle le rapport molaire de 1-chloro-1,2 difluoroéthylène (R-1122a) sur 2,3,3,3-tétrafluoropropène (HFO-1234yf) est dans la plage d'environ 10 sur environ 40 à environ 90 sur 60.

5. Composition de type azéotrope selon la revendication 1, dans laquelle le rapport molaire de 1-chloro-1,2 difluoroéthylène (R-1122a) sur 2,3,3,3-tétrafluoropropène (HFO-1234yf) est d'environ 10 sur 90.
